(19) **Europäisches Patentamt**
**European Patent Office**
**Office européen des brevets**

(11) Publication number: **0 507 598 B1**

(12) **EUROPEAN PATENT SPECIFICATION**

(45) Date of publication of patent specification: **21.06.95**

(51) Int. Cl.⁶: **A23L 1/236**, A23L 2/52, A23L 2/54, A23L 2/38, A23G 3/30

(21) Application number: **92302943.3**

(22) Date of filing: **03.04.92**

(54) Sweetening agents.

(30) Priority: **05.04.91 GB 9107142**

(43) Date of publication of application:
**07.10.92 Bulletin 92/41**

(45) Publication of the grant of the patent:
**21.06.95 Bulletin 95/25**

(84) Designated Contracting States:
**AT BE CH DE DK ES FR GB GR IT LI LU MC NL PT SE**

(56) References cited:
**EP-A- 0 390 438**
**EP-A- 0 425 115**
**WO-A-90/13994**
**GB-A- 2 153 651**
**US-A- 4 087 558**

(73) Proprietor: **TATE & LYLE PUBLIC LIMITED COMPANY**
**Sugar Ouay**
**Lower Thames Street**
**London, EC3R 6DO (GB)**

(72) Inventor: **Jenner,Michael Ralph**
**Berry Park,Welcombe,**
**Nr.Bideford,Devon EX39 6HH (GB)**

(74) Representative: **Ablewhite, Alan James et al**
**MARKS & CLERK,**
**57/60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to sweetening agents for ingestible products and oral products, and sweetening compositions comprising sucralose and neohesperidine DC.

By an "ingestible product" there is meant one which is intended to be swallowed as a whole, such as a foodstuff or a beverage or an orally administered medicine. By an "oral product" there is meant one which is not intended to be swallowed, but taken into the mouth for the treatment of the buccal cavity, for instance a toothpaste or a mouthwash. The terms ingestible product and oral product do not include chewing gum.

By a "sweetening composition" there is meant a composition which is not itself taken orally, either to be ingested or taken into the mouth, but instead is intended to be added to other products to render them sweet or to increase their sweetness. Thus, a sweetening composition may be used to sweeten an ingestible product or an oral product, or may be incorporated in sweetened concentrates for use in the preparation of ingestible or oral products (eg: bottling syrups for the preparation of beverages, and dry mixes of cake ingredients).

Sucralose (1,6-dichloro-1-6-dideoxy-$\beta$-D-fructofuranosyl 4-chloro-4-deoxy-$\alpha$-D-galactopyranoside) is a high intensity sweetener for ingestible and oral products and for sweetening compositions, as disclosed in British Patent No. 1,543,167. Sucralose is about 600 times sweeter than sucralose on a weight for weight basis, but this varies with concentration and can be affected by the nature of the product in which it is used. In terms of quality of sweetness, sucralose tastes like sucrose but the duration of sweetness is slightly longer.

Neohesperidine DC (neohesperidine dihydrochalcone), hereinafter called neo DC, is classed as a high intensity sweetener (see US Patent No. 3,087,871), but the rate of increase of sweetness with concentration decreases markedly above about 100 ppm (equivalent to about 5% sucrose) and the quality of sweetness is poor compared with sucralose. At low concentrations, neo DC is about 600 times sweeter than sucrose on a weight for weight basis, but the onset of sweetness is delayed, the maximum intensity of sweetness develops slowly, the sweetness decays gradually and there is a lingering aftertaste variously described as "menthol", "liquorice" and "cooling". These properties make it difficult to measure the sweetness intensity of neo DC relative to sucrose at concentrations above about 60 ppm.

We have now found that sweetening agents comprising sucralose and neo DC can be used in ingestible and oral products to provide unexpected benefits in terms of economy without any adverse effect on the quality of sweetness, provided that the concentration of neo DC in the sweetened product is such that its unpleasant aftertaste is not detectable. In practice, this concentration varies with the nature of each individual product. Thus in rather strongly flavoured products, such as toothpaste, mouthwash and some types of confectionery, concentrations of neo DC up to about 80 ppm may be used, but in carbonated cola beverages concentrations of neo DC above 20-25 ppm can have an adverse effect on the quality of sweetness.

The sweetening agents of the present invention possess an augmented sweetening power so that there is a saving on the amount of sweetener required to impart a given intensity of sweetness to an ingestible or oral product. At the same time, products sweetened with these sweetening agents generally have a pleasant sweet taste similar to that provided by sucrose so long as the concentration of neo DC is such that its aftertaste is not detectable.

The sweetening power of combinations of sucralose and neo DC is augmented by synergy between the two sweeteners, which provides more sweetness than would be expected from summation of the sweetness contributed by each of them. In general, the greatest increases in sweetening power occur when the sweetening agents contribute similar amounts of sweetness to the combination. Thus, an aqueous solution of 30 ppm sucralose and 50 ppm neo DC with an expected sweetness equivalent to 4% sucrose was found to have a sweetness equivalent to 7% sucrose, ie: an increased sweetness of 77% (Example 1). Surprisingly, however, substantial increases in sweetening power are obtained with combinations in which sucralose provides almost all of the sweetness and neo DC contributes very little. For example, an aqueous solution of 150 ppm sucralose and 15 ppm neo DC with an expected sweetness equivalent to 8.3% sucrose was found to have a sweetness equivalent to 11% sucrose, ie: an increased sweetness of 33%.

Synergy between sucralose and certain other high intensity sweeteners is disclosed in British Patents GB 2,098,848 B and GB 2,154,850 B, but these other sweeteners (saccharin, acesulfame-K, stevioside and cyclamate) have a better quality of sweetness than neo DC and the increase in sweetening power does not extend to compositions in which the other sweetener contributes little or no sweetness. Synergy was not found for combinations of sucralose and dipeptide sweeteners, particularly aspartame, although the quality of sweetness is enhanced (GB 2,153,651 B).

Mixtures of acesulfame-K and neo DC are disclosed in U.S. Patent No. 4,158,068. These mixtures are said to have an improved sucrose-like taste over that of the individual components.

In general, the synergy between sucralose and neo DC is of a similar magnitude to that between sucralose and cyclamate and is greater than that found for combinations of sucralose with saccharin, acesulfame-K or stevioside.

An encapsulated sweetening composition for use in chewing gum comprising 45% sucralose, 15% neo DC, 25% shellac and 15% hydroxypropylmethyl cellulose is disclosed in WO90/13994 (Wm Wrigley Jr Company). Use of this composition in chewing gum is expected to cause delayed release of the sweeteners, but the specification does not provide any indication of whether the sweeteners are released at the same or at different rates and does not provide any evidence of synergy between them. The specification also discloses chewing gum formulas containing 0.05% (500 ppm) sucralose and 0.01% (100 ppm) neo DC, but again there is no evidence of synergy.

Whether or not there is any synergy between sucralose and neo DC in chewing gum at the concentrations of neo DC disclosed in WO/13994, it is clear that at such concentrations the undesirable aftertaste would be detectable in the ingestible and oral products defined herein and the benefits of any synergy would be out weighed by the reduction in the quality of sweetness.

According to the present invention there is provided a method of sweetening an ingestible product or an oral product comprising incorporating therein sucralose and neo DC in a ratio from 1 : 2 to 30 : 1 by weight, the content of neo DC being at most 80 ppm by weight. There is also provided a sweetening agent comprising a mixture of sucralose and neo DC in a ratio of from 1 : 2 to 30 : 1 by weight and of a sweetness such that an ingestible product or oral product effectively sweetened with the sweetening agent contains at most 80 ppm by weight of neo DC. There is further provided a sweetened ingestible product or oral product, containing sucralose and neo DC in a ratio of from 1 : 2 to 30 : 1 by weight the content of neo DC being at most 80 ppm by weight; or a concentrate for dilution to provide an ingestible product or an oral product, containing sucralose and neo DC in a ratio of from 1 : 2 to 30 : 1 by weight and having a neo DC content such that, on dilution it provides a neo DC level of at most 80 ppm by weight.

The sweetening agents can be used in any conventional way, including the sweetening of ingestible and oral products and of concentrates for the preparation of such products. They can also be used, with liquid or solid extenders and carriers, in sweetening compositions. The extender or carrier may include, for example, conventional water-dispersible tabletting ingredients such as starch, lactose and other sugars; low density bulking agents to provide a granular sweetening composition having a volume per unit of sweetness equivalent to that of sucrose, for example spray dried maltodextrin; and aqueous solutions containing adjuvants such as stabilising agents, colourings and viscosity-adjusting agents.

Beverages, such as soft drinks, containing a combination of sucralose and neo DC may be formulated as sugar-free dietetic products or sugar-reduced products containing the minimum amount of sugar required by law. In the absence of sugar, it may be desirable to add further agents to provide a "mouth feel" similar to that provided by sugar, for example, pectin or a vegetable gum.

Valuable increases in sweetening power, ranging from 9% to 77%, can be obtained with combinations of sucralose and neo DC in ratios of from 1 : 2 to 30 : 1 by weight. Combinations of sucralose and neo DC in ratios of 15 : 1 to 1 : 2 by weight exhibit increases in sweetening power of 19% to 77% in aqueous solutions. The greatest increases in sweetening power were found for combinations of sucralose and neo DC in ratios of 2 : 1 to 1 : 2 by weight (ie: 53% to 77% in aqueous solutions at total sweetener concentrations of 65-110 ppm).

Combinations of sucralose and neo DC can be used to sweeten a wide range of ingestible and oral products. Ingestible and oral products sweetened with the sweetening agents of the present invention have a pleasant sweet taste and contain less sweetener (i.e. sucralose plus neo DC) than equally sweet counterparts sweetened with sucralose alone. In addition, taste panellists commented that the beverages of Examples 2 and 3 (below) containing low levels of neo DC had less of a sweet aftertaste than when they were sweetened with sucralose alone.

The following Examples illustrate the invention.

Example 1  Sweetening Power of Blends of sucralose and neo DC

The sweetness of each sweetener and sweetener combination was measured by using taste panels to find the concentration at which it matched the sweetness of a given concentration of sucrose, i.e. the sucrose equivalent value (SEV).

The materials used were as follows:

Sucrose (granulated sugar)      - Tate & Lyle Sugars

Sucralose — Tate & Lyle Speciality
— Sweeteners
Neohesperidine DC — Sigma Chemical

The sweeteners were dissolved in Malvern water at the appropriate concentrations (% w/v) and served at a temperature of about 20°C.

The SEVs of aqueous solutions of sucralose at concentrations of 0.003% to 0.024% and aqueous solutions of neo DC at concentrations of 0.002% to 0.010% were measured by matching with a series of sucrose solutions ranging from 1.0% to 12.0%. The results were as follows:

| Sucralose (% w/v) | Neo DC (% w/v) | Equi-sweet sucrose (% w/v) |
|---|---|---|
| 0.003 | | 2.1 |
| 0.006 | | 4.0 |
| 0.009 | | 5.5 |
| 0.012 | | 6.5 |
| 0.015 | | 7.5 |
| 0.018 | | 8.5 |
| 0.021 | | 9.0 |
| 0.024 | | 9.9 |
| | 0.002 | 1.2 |
| | 0.004 | 2.3 |
| | 0.006 | 3.3 |
| | 0.008 | 4.1 |
| | 0.010 | 5.0 |

Solutions containing several different combinations of sucralose and neo DC were prepared and the SEVs of the blends were measured as described above. The results show that the SEVs of the blends are always higher than the corresponding sums of the SEVs of the individual sweeteners, i.e. the blends have an enhanced sweetening power.

The increase in sweetening power is calculated by the formula:

$$\frac{(A-B)}{B} \times 100 \ \%$$

where: A = the actual SEV, and B = the expected SEV.

| SUCRALOSE (ppm) | NEO DC (ppm) | EXPECTED SEV (%) | ACTUAL SEV (%) | INCREASED SWEETENING POWER (%) |
|---|---|---|---|---|
| 30 | 20 | 2.1+1.2=3.3 | 4.5 | 36 |
| 30 | 35 | 2.1+1.9=4.0 | 7.0 | 75 |
| 30 | 50 | 2.1+2.7=4.8 | 8.5 | 77 |
| 60 | 20 | 4.0+1.2=5.2 | 7.5 | 44 |
| 60 | 35 | 4.0+1.9=5.9 | 9.0 | 53 |
| 60 | 50 | 4.0+2.7=6.7 | 10.5 | 57 |
| 120 | 5* | 6.5+0.3=6.8 | 7.5 | 10 |
| 120 | 10* | 6.5+0.5=7.0 | 8.5 | 21 |
| 120 | 15* | 6.5+0.8=7.3 | 10.0 | 37 |
| 150 | 5* | 7.5+0.3=7.8 | 8.5 | 9 |
| 150 | 10* | 7.5+0.5=8.0 | 9.5 | 19 |
| 150 | 15* | 7.5+0.8=8.3 | 11.0 | 33 |

* the SEVs of neo DC at 5, 10 and 15 ppm, were determined by extrapolation.

The increases in sweetening power are reflected in reductions in the amount of sweetener required to provide a desired level of sweetness in ingestible products and oral compositions.

Example 2 Carbonated Cola Beverage

Carbonated cola beverages were prepared using sucralose or blends of sucralose and neo DC to provide a sweetness equivalent to 11% sucrose.
Bottling concentrate ingredients (% w/v):

| Sucrose | 60.00 | - | - | - |
|---|---|---|---|---|
| Sucralose | - | 0.1150 | 0.0760 | 0.0575 |
| Neo DC | - | - | 0.0082 | 0.0127 |
| Sodium benzoate | 0.100 | 0.100 | 0.100 | 0.100 |
| BBA Cola Flavour 01578 | 1.000 | 1.000 | 1.000 | 1.000 |
| BBA Cola Base 31457 | 0.825 | 0.825 | 0.825 | 0.825 |
| Phosphoric acid | 0.300 | 0.300 | 0.300 | 0.300 |
| Water | to 100 | to 100 | to 100 | to 100 |

to prepare equi-sweet cola beverages, mix one part bottling concentrate with 4.5 parts of carbonated water.

Example 3 Chocolate Milk Drink

Chocolate milk drinks were prepared using sucralose or blends of sucralose and neo DC to provide a sweetness equivalent to 5% sucrose.
Ingredients (%w/v):

| Sucrose | 5.00 | - | - | - |
|---|---|---|---|---|
| Sucralose | - | 0.0075 | 0.0050 | 0.00375 |
| Neo DC | - | - | 0.0017 | 0.0024 |
| Cocoa Powder 4001 | 1.00 | 1.00 | 1.00 | 1.00 |
| Carrageenan | 0.02 | 0.02 | 0.02 | 0.02 |
| Semi-skimmed milk | to 100 | to 100 | to 100 | to 100 |

To prepare chocolate milk drinks, premix the dry ingredients and disperse in milk. Heat to 80°C to pasteurise, homogenise and cool to 4°C.

## Claims

1. A method of sweetening an ingestible product or an oral product comprising incorporating therein sucralose and neohesperidine dihydrochalcone (neo DC) in a ratio from 1 : 2 to 30 : 1 by weight, the content of neo DC being at most 80 ppm by weight.

2. A method according to Claim 1 in which the ratio of sucralose to neo DC is from 1 : 2 to 15 : 1 by weight.

3. A method according to Claim 2 in which the ratio of sucralose to neo DC is from 1 : 2 to 2 : 1 by weight.

4. A method according to any of Claims 1 to 3 in which the content of neo DC is from 5 to 50 ppm by weight .

5. A method according to Claim 4 in which the content of neo DC is from 5 to 25 ppm by weight.

6. A sweetening agent comprising a mixture of sucralose and neo DC in a ratio of from 1 : 2 to 30 : 1 by weight and of a sweetness such that an ingestible product or oral product effectively sweetened with the sweetening agent contains at most 80 ppm by weight of neo DC.

7. A sweetening agent according to Claim 6 in which the ratio of sucralose to neo DC is from 1 : 2 to 15 : 1 by weight.

8. A sweetening agent according to Claim 7 in which the ratio of sucralose to neo DC is from 1 : 2 to 2 : 1 by weight.

9. A sweetened ingestible product or oral product, containing sucralose and neo DC in a ratio of from 1 : 2 to 30 : 1 by weight the content of neo DC being at most 80 ppm by weight; or a concentrate for dilution to provide an ingestible product or an oral product, containing sucralose and neo DC in a ratio of from 1 : 2 to 30 : 1 by weight and having a neo DC content such that, on dilution it provides a neo DC level of at most 80 ppm by weight.

10. A sweetened ingestible product or oral product or concentrate according to Claim 9 in which the ratio of sucralose to neo DC is from 1 : 2 to 15 : 1 by weight.

11. A sweetened ingestible product or oral product or concentrate according to Claim 10 in which the ratio of Sucralose to neo DC is from 1 : 2 to 2 : 1 by weight.

12. A sweetened ingestible product or oral product according to any of Claims 9 to 11 in which the content of neo DC is from 5 to 50 ppm by weight.

13. A sweetened ingestible product or oral product according to Claim 12 in which the content of neo DC is from 5 to 25 ppm by weight.

14. A sweetening composition containing a sweetening agent according to any of Claims 6 to 8 together with a liquid or solid carrier or extender.

**Patentansprüche**

1. Verfahren zum Süßen eines Nahrungsmittels oder eines Oralprodukts umfassend das Einarbeiten von Sucralose und Neohesperidindihydrochalcon (Neo DC) diese in einem Gewichtsverhältnis von 1 : 2 bis 30 : 1, wobei der Gehalt an Neo DC höchstens 80 ppm, bezogen auf das Gewicht, beträgt.

2. Verfahren gemäß Anspruch 1, in dem das Gewichtsverhältnis von Sucralose zu Neo DC von 1 : 2 bis 15 : 1 beträgt.

3. Verfahren gemäß Anspruch 2, in dem das Gewichtsverhältnis von Sucralose zu Neo DC von 1 : 2 bis 2 : 1 ist.

4. Verfahren gemäß einem der Ansprüche 1 bis 3, in dem der Gehalt an Neo DC 5 bis 50 ppm, bezogen auf das Gewicht, beträgt.

5. Verfahren gemäß Anspruch 4, in dem der Gehalt an Neo DC 5 bis 25 ppm, bezogen auf das Gewicht beträgt.

6. Süßmittel, umfassend eine Mischung aus Sucralose und Neo DC in einem Gewichtsverhältnis von 1 : 2 bis 30 : 1 und mit einer solchen Süße, daß ein Nahrungsmittel oder ein Oralprodukt, das mit dem Süßmittel gesüßt wird, höchstens 80 ppm, bezogen auf das Gewicht an Neo DC, enthält.

7. Süßmittel gemäß Anspruch 6, in dem das Gewichtsverhältnis von Sucralose zu Neo DC 1 : 2 bis 15 : 1 beträgt.

8. Süßmittel gemäß Anspruch 7, in dem das Gewichtsverhältnis von Sucralose zu Neo DC 1 : 2 bis 2 : 1 beträgt.

9. Gesüßtes Nahrungsmittel oder Oralprodukt, enthaltend Sucralose und Neo DC in einem Gewichtsverhältnis von 1 : 2 bis 30 : 1, wobei der Gehalt an Neo DC höchstens 80 ppm, bezogen auf das Gewicht, beträgt oder zu verdünnendes Konzentrat für ein Nahrungsmittel oder Oralprodukt, das Sucralose und Neo DC in einem Gewichtsverhältnis von 1 : 2 bis 30 : 1 enthält und einen Neo DC-Gehalt aufweist, so daß nach der Verdünnung der Neo DC-Gehalt höchstens 80 ppm, bezogen auf das Gewicht, beträgt.

**10.** Gesüßtes Nahrungsmittel oder Oralprodukt oder Konzentrat gemäß Anspruch 9, in dem das Gewichtsverhältnis von Sucralose zu Neo DC 1 : 2 bis 15 : 1 beträgt.

**11.** Gesüßtes Nahrungsmittel oder Oralprodukt oder Konzentrat gemäß Anspruch 10, in dem das Gewichtsverhältnis von Sucralose zu Neo DC 1 : 2 bis 2 : 1 beträgt.

**12.** Gesüßtes Nahrungsmittel oder Oralprodukt gemäß einem der Ansprüche 9 bis 11, in dem der Gehalt an Neo DC 5 bis 50 ppm beträgt.

**13.** Gesüßtes Nahrungsmittel oder Oralprodukt gemäß Anspruch 12 in dem der Gehalt an Neo DC 5 bis 25 ppm beträgt.

**14.** Süßmittelzusammensetzung enthaltend ein Süßmittel gemäß einem der Ansprüche 6 bis 8 zusammen mit einem flüssigen oder festen Träger oder Streckmittel.

**Revendications**

**1.** Procédé d'édulcoration d'un produit ingérable ou d'un produit oral comprenant l'incorporation dans ce produit de sucralose et de néohespéridine dihydrochalcone (néo DC) en un rapport compris entre 1/2 et 30/1 en poids, la teneur en néo DC étant au plus de 80 ppm en poids.

**2.** Procédé selon la revendication 1, dans lequel le rapport du sucralose au néo DC est compris entre 1/2 et 15/1 en poids.

**3.** Procédé selon la revendication 2, dans lequel le rapport du sucralose au néo DC est compris entre 1/2 et 1/1 en poids.

**4.** Procédé selon l'une quelconque des revendications 1 à 3, dans lequel la teneur en néo DC est comprise entre 5 et 50 ppm en poids.

**5.** Procédé selon la revendication 4, dans lequel la teneur en néo DC est comprise entre 5 et 25 ppm en poids.

**6.** Un agent édulcorant comprenant un mélange de sucralose et de néo DC en un rapport compris entre 2/30 et 30/1 en poids et d'un pouvoir sucrant tel que le produit ingérable ou le produit oral, édulcoré efficacement à l'aide de l'agent édulcorant, renferme au maximum 80 ppm en poids de néo DC.

**7.** Un agent édulcorant selon la revendication 6, dans lequel le rapport du sucralose au néo DC est compris entre 1/2 et 15/1 en poids.

**8.** Un agent édulcorant selon la revendication 7, dans lequel le rapport du sucralose au néo DC est compris entre 1/2 et 2/1 en poids.

**9.** Un produit ingérable ou un produit oral édulcorés renfermant du sucralose et du néo DC en un rapport compris entre 1/2 et 30/1 en poids, la teneur en néo DC étant inférieure à 80 ppm en poids, ou un concentré destiné à être dilué pour obtenir un produit ingérable ou un produit oral, contenant du sucralose ou du néo DC en un rapport compris entre 1/2 et 30/1 en poids, présentant une teneur en néo DC telle, qu'après dilution, la teneur en néo DC du produit final soit au plus égale à 80 ppm en poids.

**10.** Un produit ingérable ou un produit oral édulcoré ou concentré selon la revendication 9, dans lequel le rapport du sucralose au néo DC est compris entre 1/2 et 15/1.

**11.** Un produit ingérable ou un produit oral édulcore ou concentré selon la revendication 10, dans lequel le rapport du sucralose au néo DC est compris entre 1/2 et 2/1 en poids.

**12.** Un produit ingérable ou un produit oral édulcoré selon l'une quelconque des revendications 9 à 11, dans lequel la teneur en néo DC est comprise entre 5 et 50 ppm en poids.

**13.** Un produit ingérable ou un produit oral édulcoré selon la revendication 12, dans lequel la teneur en néo DC est comprise entre 5 et 25 ppm en poids.

**14.** Une composition édulcorante contenant un agent édulcorant selon l'une quelconque des revendications 6 à 8 associé à un support ou diluant liquide ou solide.